# EUROPEAN PATENT SPECIFICATION

(11) **EP 2 831 697 B1**
(45) Date of publication and mention of the grant of the patent: **04.10.2017**
(21) Application number: 13767589.8
(22) Date of filing: 06.03.2013
(51) Int. Cl.: G06F 3/00, H04L 29/08, G06F 17/30

(54) **CLIENT SPECIFIC INTERACTIONS WITH ENTERPRISE SOFTWARE SYSTEMS**
KUNDENSPEZIFISCHE INTERAKTIONEN MIT UNTERNEHMENSSOFTWARESYSTEMEN
INTERACTIONS SPÉCIFIQUES AUX CLIENTS AVEC DES SYSTÈMES LOGICIELS D'ENTREPRISE

(30) Priority: 26.03.2012 US 201213430566
(43) Date of publication of application: 04.02.2015
(73) Proprietor: Greyheller LLC, San Ramon, California 94583 (US)
(72) Inventor: HELLER, Chris, San Ramon California 94583 (US); GREY, Larry, San Ramon California 94583 (US)
(74) Representative: Käck, Stefan
(86) International application number: PCT/US2013/029446
(87) International publication number: WO 2013/148098

(56) References cited:
- EP-A2- 1 398 692
- FR-A1- 2 849 561
- US-A1- 2002 103 881
- US-A1- 2003 058 277
- US-A1- 2005 183 021
- US-A1- 2007 100 834
- US-A1- 2009 064 105
- US-A1- 2011 252 147

## Description

### FIELD

This application relates generally to enterprise software systems and more specifically to enterprise resource planning (ERP) systems and plugins for web servers of the ERP systems for interacting with different types of client devices and selective optimization and rendering of content based on the types of the client devices.

### BACKGROUND

ERP systems were originally developed in the 1980s and the 1990s to support access by desktop terminals and/or personal computers. These systems are complex, difficult to implement, and heavily customized by customers. Most ERP systems have unique business rules and stringent regulatory and security functionality, which are difficult to create and later reconfigure.

From a user experience perspective, current ERP systems require keyboards, high resolution screens with wide aspect ratios, and accurate selection devices in trackballs, mice, and touchpads. Mobile devices, on the other hand, have narrow aspect ratios screens and typically use touch features of the screen for selection and data entry. Therefore, deploying ERP systems as delivered by the software provider and implemented on premise (or hosted) on mobile devices requires re-implementation, purchasing of additional hardware, integrating systems, and re-deploying customizations.
As mobile devices become important tools in modern enterprises and gain widespread use, there is a need for solutions that allow organizations to use their existing ERP systems without additional efforts.

U.S. Patent Application Publication No. US 2011/0252147 A1 describes a method and apparatus for accessing an enterprise resource planning system via a mobile device. The method includes parsing data from a host application access application into at least one object in an application-specific format, converting the data into an intermediate format that is compatible with a mobile device and communicating the converted data to the mobile device.

French Patent Application Publication No. FR 2 849 561 A1 relates to a multi-protocol communication system for rendering data. The system has two communication front-ends. A first front-end communicates with a mobile terminal (e.g., a cellular phone) and a second front-end communicates with a data source. The front-ends translate data. An application server manages communication between the front-ends and monitors the date translation.

Further, European Patent Application Publication No. EP 1 398 692 A2 describes a communication system and method for supporting multiple languages for a mobile communication terminal.

### SUMMARY

The invention is defined in claims 1, 10, and 13, respectively. Particular embodiments are set out in the dependent claims.

This summary is provided to introduce a selection of concepts in a simplified form that are further described below in the Detailed Description. This summary is not intended to identify key features or essential features of the claimed subject matter, nor is it intended to be used as an aid in determining the scope of the claimed subject matter.

Provided are the system and method for automatic selective optimization and rendering based on characteristics of a client device of content from an ERP system. A client device can be a desktop, a laptop, a netbook, an ultrabook, a smartphone, and a tablet computer. In some embodiments, the method for automatic selective optimization and rendering of content based on characteristics of a client device may be based on receiving the content from a enterprise system, with the enterprise system being pre-configured based on specific business rules; analyzing the content to determine properties associated with the content; selectively optimizing the content, based on the properties associated with the content and the characteristics of the client device, thereby producing optimized content; and facilitating selective rendering of the optimized content on the client device, thereby providing for the selective optimization and rendering of the content without having to reconfigure the enterprise system.

### BRIEF DESCRIPTION OF THE DRAWINGS

Embodiments are illustrated by way of example and not limitation in the figures of the accompanying drawings, in which like references indicate similar elements.
FIG. 1 is a schematic high level representation of an ERP system including a system for automatic selective optimization and rendering of content for interacting with various types of client devices.
FIG. 2 is a block diagram illustrating a sample system for automatic selective optimization and rendering of content based on characteristics of a client device.
FIG. 3 is a schematic representation of various interactions between components of the ERP system, a system for automatic selective optimization and rendering of content, and a client device.
FIG. 4 is a process flow chart representing handling of a client request by the ERP system with a system for automatic selective optimization and rendering of content.
FIG. 5 is a process flow chart representing a more detailed method for handling a client request by the ERP system.
FIG. 6 shows an exemplary optimization process of content for a mobile device.
FIG. 7 is a diagrammatic representation of an exemplary machine in the form of a computer system, within which a set of instructions for causing the machine to perform any one or more of the methodologies discussed herein may be executed.

### DETAILED DESCRIPTION

ERP systems integrate internal and external management information across an entire organization, embracing various relationships within the organization, such as finance/accounting, manufacturing, sales and service, and customer relationship management. ERP systems automate many of these activities with an integrated software application. The purpose of ERP systems is to facilitate the flow of information between all business functions inside the boundaries of the organization and manage the connections to outside stakeholders. ERP systems can run on a variety of computer hardware and network configurations and typically employ a database as a repository for information.

Many ERP systems started moving toward web-centric designs, allowing various functions of such ERP systems to be accessed and run via a web browser on mobile telephones, tablet computers, laptops, or desktop computers from remote locations. To enable this, ERP systems require re-implementation, purchasing of additional hardware, integrating systems, and re-deploying customizations.

The system for automatic selective optimization and rendering of content based on characteristics of a client device described herein may enable interactions with client devices of different types without additional re-implementations and re-deploying customizations while extending ERP system output instead of replacing it.

The system may automatically perform selective optimization of content from an ERP system by working with the user interface generated by the ERP system. The optimization may be performed based on characteristics of a client device. For example, optimization for client devices with touch screens may include replacing of mouse-optimized controls, optimized ERP system navigation, tagging of data entry fields with field types to show an appropriate keypad.

In some embodiments, optimization of content of an ERP system for client devices may include optimization for various screen sizes, specifically, re-flowing of pages to be in portrait rather than in portrait orientation, based on a size of the client device screen, and pivoting wide grids for improved user experience. This approach may allow the content layout to match the size of the client device screen, thereby improving the usability and user experience.

In some embodiments, the system for automatic selective optimization and rendering of content may enable customizations and upgrades of an ERP system. This approach may allows organizations to avoid having to provide custom modifications to various client devices as the system for automatic selective optimization and rendering of content may render the content efficiently for any client device.In some embodiments, the system for automatic selective optimization and rendering of content may be a plug-in that exists on the web server between the browser of the end-user on a client device and the ERP application server and ERP application database. The system for automatic selective optimization and rendering of content may leverage the output of the ERP system as the starting point for marking it up for client device access. The output may be analyzed by the system to read the code/definitions of the ERP system to understand relationships between elements in the user interface and the meaning of fields and controls on the user interface. The existing application infrastructure may be leveraged by using a J2EE web server plug-in (servlet filter) to inject the optimization logic into the processing stream. Interactions between the ERP system and client devices (requests, sessions, and requested content) may be captured by the system for automatic selective optimization and rendering of content to allow rules to control security and content rendering. This allows the same web server to handle both mobile and non-mobile traffic.

In some embodiments, the functionality of the system for automatic selective optimization and rendering of content may be represented by the admin services component, navigation component, user interface component, mobile extensions component, security component, and metadata services component.

The admin services component may control the overall processing of the system for automatic selective optimization and rendering of content. Because it is intended to function as a seamless part of the ERP application infrastructure, it is designed to work in conjunction with the processing already done on the web server of the ERP system. As such, it may make decisions about displaying client device rendering, allowing access to content, level of logging performed, type of content to be served, and/or necessity to reload access rules from the database. In order to make these decisions, the system for automatic selective optimization and rendering of contentmay understand a profile of the user/device accessing the system, state of the plug-in, and type of request being made to the system.

The admin services component may use the following attributes of the user/device to control access to the system: the browser/operating system making the request to the system (this is used to determine whether a mobile device is accessing the system and will make a decision as to whether to perform mobile rendering) and the location from which the user is accessing the system (this is used to determine whether to grant or deny access to content based on location).

In some embodiments, the type of content requested from the system may be used to control the request processing. If the request is for HyperText Markup Language (HTML) content for the system, the HTML generated by the application will be used as the starting point for mobile rendering. If the request is for navigation menus, then the plug-in will request the raw menu information from the system and generate its own mobile rendering. If the request is for portal content, then the plug-in will either start with the HTML generated by the application or request the raw data, depending on whether the request is related to navigation or content.

If the request is to change the state of the mobile product, it will override whether mobile rendering will be performed (or not performed) for the current session; change the logging level of the mobile product; re-load the configuration data from the database to the plug-in; purge the server cache of the metadata (see metadata services); turn the plug-in on or off; and turn the security functions on or off.

In some embodiments, the navigation component may read navigation rules of the ERP system and repurpose content for client device access. Services performed by the navigation component may include reading the hierarchy of menu titles and descriptions to be presented in a mobile format as users drill through the menus; pruning navigation to parts of the system that are disabled either due to location security or device access rules; and keeping track of the breadcrumbs and maintaining a breadcrumb menu to allow easy access without hitting the back button. The latter may include navigating through menu relationships in the navigation defintions of the application; identifying navigation collections (pages defined for the purpose of navigation) and displaying them in a menu form; and identifying when the system was accessed from an external system and embedding the breadcrumb for it in the breadcrumb menu. To perform these services, the infrastructure of the navigation component may include JQuery mobile menu and navigation components; role-based caching of navigation menus to minimize the need to request information from the ERP system about who can access what content; and metadata services to allow the web server to access the menus, rules, and the like that drive the presentation and navigation within the system.

In some embodiments, the user interface component may take the user interface generated by the ERP application and modify it to work properly on client devices. This may include marking up the HTML generated by the ERP system. Marking up the HTML may involve several operations. First of them is marking the HTML as valid HTML5 syntax. Then, it may involve identifying the meaning of the content on the generated user interface by looking at the HTML and Asynchronous Javascript And XML(AJAX XML) generated by the application. The metadata services component may be used in combination with the structure of the user interface (UI) to decide on an association of page elements, such as page containers (group boxes), labels, fields, and page controls; movement of groups of entities within the user interface, so that pages can be displayed in narrow mode and still be meaningful; tagging of fields as to the type of field (i.e., numeric, date, time, alphanumeric); honoring of multilingual translations within the ERP system; changing controls to touch-optimized controls using JQuery mobile (or similar library); and removing extraneous HTML markup (such as extra tables and width tags) intended to optimize UI for wide screen monitors.

Another operation that may be part of marking up the HTML is managing javascript generated by the ERP system. This may consist of stripping out extraneous javascript not needed on mobile device and embeding javascript to perform processing on the device to minimize the number of server trips and improve performance (such as navigating between multiple items within a page).

Also, marking up the HTML may include rules-based templating infrastructure to minimize code serving to process UI services, thereby allowing rapid iterations and deployments without requiring re-compilation of code; and deciding on logic for making modifications to user interface without requiring expensive processing to walk the document object model (DOM) for each page being rendered.

In some embodiments, the mobile extensions component may provide a capability for injecting customer-defined logic to the end-product of the user interface component. This allows the customer to make additional UI tweaks to the ERP system without requiring modification of either the core ERP application or the core mobile code of the plug-in. The UI tweaks may include injecting modifications without changing the plug-in at different locations within the generated UI. This may be done based on understanding properties of the session/user/and content in the ERP system, leveraging the same rules-based templating infrastructure in the UI services to allow robust processing rules based on content, user, session, or application data; and allowing calls to any javascript library that is enabled in the system. The modifications are defined and administered in relational database pages that are deployed within the user interfaceof the ERP system.

In some embodiments, the security component may provide device and location security features to allow easy control, management, and auditing of mobile access. This may include rules-based means of identifying whether to allow or block access to parts of the ERP system in mobile access; generating detailed logs of all mobile traffic, including date/time, Internet Protocol (IP) address, user identity, content accessed, data accessed, and actions taken; and automatic pruning of navigation UI based on rules.

In some embodiments, the metadata services component may represent the bridge between the product processing on the server and the rules by which it performs this processing. The metadata services component may provide services that extract rules that define how the ERP system is defined and structured and services that extract rules that drive how the plug-in should operate on top of the ERP system. By understanding the meaning of the different parts of the ERP system to be rendered, the plug-in is able to automatically transform the UI of the ERP application. For all of these services, the metadata services component may read the definitions from relational tables and application programming interfaces (APIs) in the ERP system; store the definitions in a cache on the web server to be processed locally; and manage the reading and storing of the definitions at either web server start-up time or as content is requested.

The metadata services component may extract the meaning of all of the pieces of the user interface generated by the ERP system. Because the plug-in understands at a granular level the meaning of all pieces of the ERP system, whether developed by the original software developer or modified by the customer, it is able to automate the mobile-optimized rendering of the user interface. The types of metadata read from the ERP system to be used as part of the plug-in may include page element structure, element properties, control properties, navigation rules, and user identity and permissions.

As the metadata services component is configured and administered from pages within the ERP system delivered by the plug-in, it may also include services to read and cache the client device configuration on the web server (i.e., branding rules, mobile extensions, additional CSS and Javascript rules).

In some embodiments, because the plug-in contains location-based security capabilities, the rules that define the access control and logging are also managed as part of the metadata services.

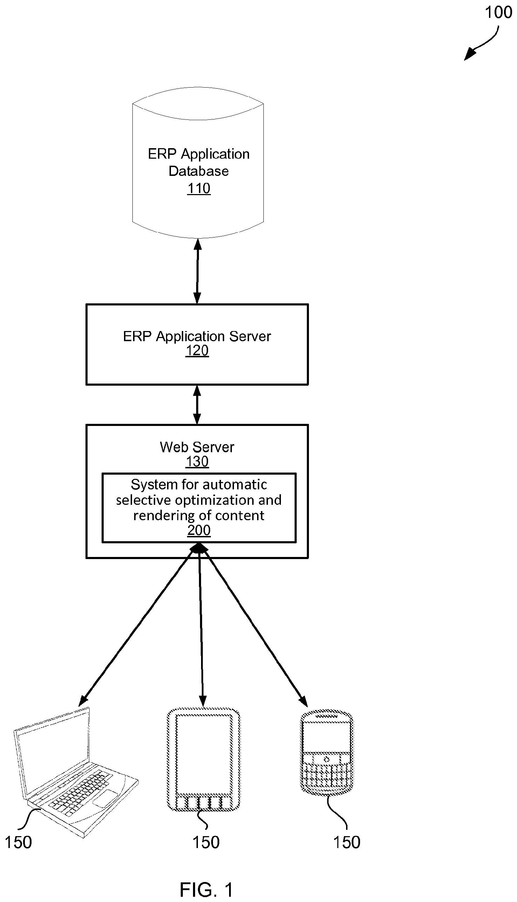

Referring now to the drawings, FIG. 1 is a schematic high level representation 100 of an ERP system comprising an ERP application database 110, an ERP application server 120, and a web server 130 with a system for automatic selective optimization and rendering of content 200 for interacting with various types of client devices 150. Client devices 150 may be any types of computer systems capable of supporting a web browser and having some input and output means. Some examples of client devices 150 include desktops, laptops, notebooks, ultrabooks, tablet computer, handheld computers, personal digital assistants (e.g., palmtop computers, enterprise digital assistants), mobile phones (e.g., smartphones), portable media players, E-book readers, game consoles, and head mounted displays. These devices may have a variety of screen sizes and input options.

Client devices 150 may be connected to web server 130 using a network (not specifically shown in FIG. 1). The network may take any suitable form, such as a wide area network (WAN) or Internet and/or one or more local area networks (LANs). The network may include any suitable number and type of devices (e.g., routers and switches) for forwarding commands, content, and/or web object requests from each client to the online community application and responses back to the clients.

The systems and methods described herein may also be practiced in a wide variety of network environments including, for example, Transmission Control Protocol (TCP) / IP-based networks, telecommunications networks, wireless networks, and the like. In addition, the computer program instructions may be stored in any type of computer-readable media. The program may be executed according to a variety of computing models including a client/server model, a peer-to-peer model, a stand-alone computing device, or according a distributed computing model in which various functionalities described herein may be effected or employed at different locations.

As explained above, client devices 150 are capable of supporting web browsers to generate user interfaces. Web browsers allow users and administrators to access various applications and administrative tools of an ERP system. Each client device 150 used for communicating with an ERP system has a browser software installed therein. Generally, no additional software (specific to the ERP system) needs to be installed on client devices 150 to implement described methods and systems.

Web server 130 may be a Java-enabled web server for supporting browser transaction requests and the application messaging technology. Web server 130 may be used to install a collection of servlets (e.g., Java servlets) designed to handle a wide range of ERP transactions. Some examples of a web server include an Apache web server, Internet Information Services (IIS) web server, nginx web server, Google web server, and Resin web server. The main function of web server 130 is to deliver web pages based on requests from client devices 150. This means delivery of HTML documents and any additional content that may be included by a document, such as images, style sheets, and scripts. The web browser described above typically initiates communication by making a request for a specific resource using HyperText Transfer Protocol (HTTP), and web server 130 server responds with the content of that resource or an error message if unable to do so. Web server 130 may also be used to receive content from client devices 150. This feature is used for submitting web forms, including the uploading of files. Web server 130 may support server-side scripting using Active Server Pages (ASP), PHP, or other scripting languages. Additional features of web server 130 specific to ERP functions are described below.

ERP application server 120 is another part of an ERP system. ERP application server 120 executes business logic. It may also be configured to issue SQL to ERP application database 110. In other words, ERP application server 120 serves as a link between web server 130 and ERP application database 110. ERP application server 120 may include various services and server processes that handle transaction requests. ERP application server 120 may be also responsible for maintaining the SQL connection to ERP application database 110 for browser requests. Some examples of middleware platforms that may be used on ERP application server 120 include TUXEDO (Transactions for Unix Extended for Distributed Operations) and Jolt. For example, TUXEDO may be used to manage database transactions, while Jolt may be used to facilitate transaction requests issued from the Internet.

ERP application database 110, which is sometimes referred to as a database server, is yet another component of an ERP system. ERP application database 110 contains one or more database engines and databases. These, in turn, include object definitions, system tables, application tables, and data. ERP application database 110 may be running one of the supported relational database management system (RDBMS)/operating system combinations. The relationship between ERP application database 110 and ERP application server 120 may be according to a one-to-many model. That is, a single ERP application database 110 can have multiple ERP application servers 120 connecting to it. ERP application database 110 may be configured to simultaneously handle multiple application server connections, development environment connections, and batch programs. A component of an ERP system that is not shown in FIG. 1 is a batch server. A batch server may include process schedulers, batch programs (e.g., application engine programs), and COBOL and SQR executables.

As stated above, a system for automatic selective optimization and rendering of content 200 on web server 130 is configured to communicate with client devices 150. In certain embodiments, the system for automatic selective optimization and rendering of content 200 is implemented as a web server plug-in, which is a set of software components that adds specific functionalities to a larger software application provided on web server 130. This plug-in enables customizing the functionality of web server 130.

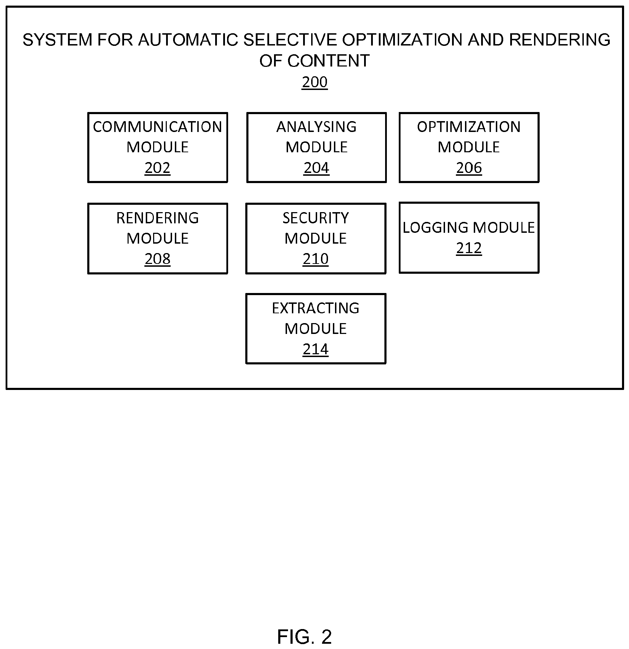

To provide this functionality, system for automatic selective optimization and rendering of content 200 includes multiple modules, as illustrated in FIG. 2. Specifically, system for automatic selective optimization and rendering of content 200 includes communication module 202, analyzing module 204, optimization module 206, rendering module 208, security module 210, logging module 212, and extracting module 214.

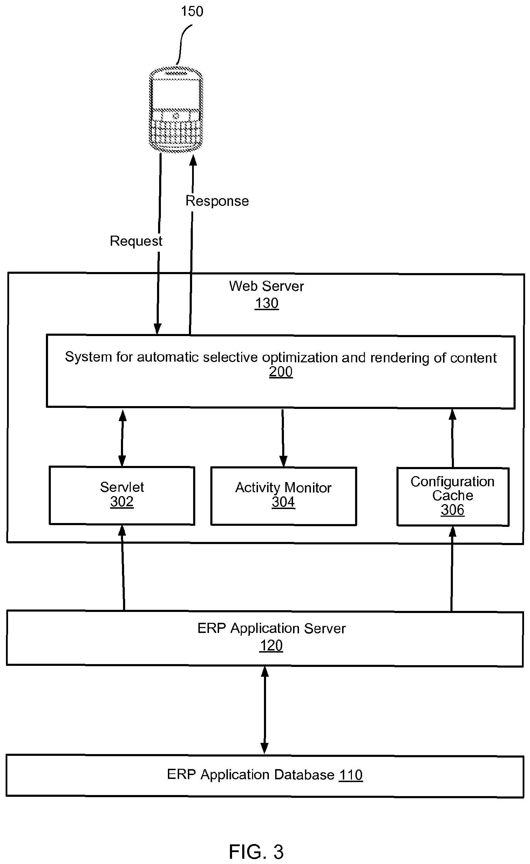

FIG. 3 is a schematic representation of various interactions between components of an ERP system, a system for automatic selective optimization and rendering of content 200, and a client device 150. Client device 150 is equipped with a web browser, which uses HTTP protocol. The browser sends requests to web server 130, which forwards the request to ERP application server 120 and further to ERP application database 110. Servlet 302 installed on web server 130 facilitates all browser connections. Configuration data is transferred to configuration cache 306 and further to the system for automatic selective optimization and rendering of content 200. User and device data and activity tracking is transferred to activity monitor 304.

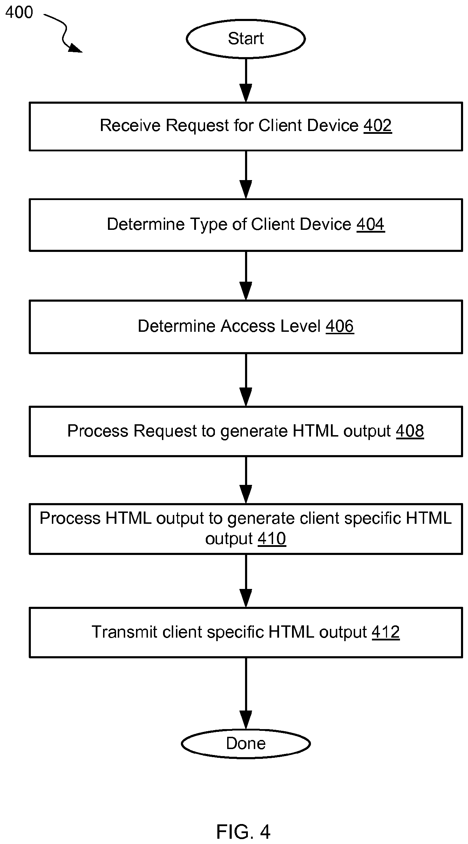

FIG. 4 is a process flow chart representing the handling of a client request by an ERP system with a system for automatic selective optimization and rendering of content. Method 400 may commence with receiving a request from a client device at a web server including a system for automatic selective optimization and rendering of content during operation 402. Method 400 may involve determining a type of the client device based on the received request or previously received information during operation 404. The previously received information may include another request, login information, and/or a cookie. For example, the request may be generated either by a non-mobile computer system or a mobile computer system. Depending on the type of the computer system, different access levels may be given to the device, and the same type of request may be processed in different manners.

Based on the type of the client device, an access level available for this type of client device may be determined during operation 406. Method 400 may then proceed with processing the request at an application server of the ERP system based on the access level during operation 408. This processing operation may generate an HTML output. It may involve retrieval of ERP information from an application database of the ERP system.

Method may proceed with processing the HTML output at the ERP interface based on the type of the client device to generate a client specific HTML output during operation 410 and transmitting the client specific HTML output to the client device during operation 412.

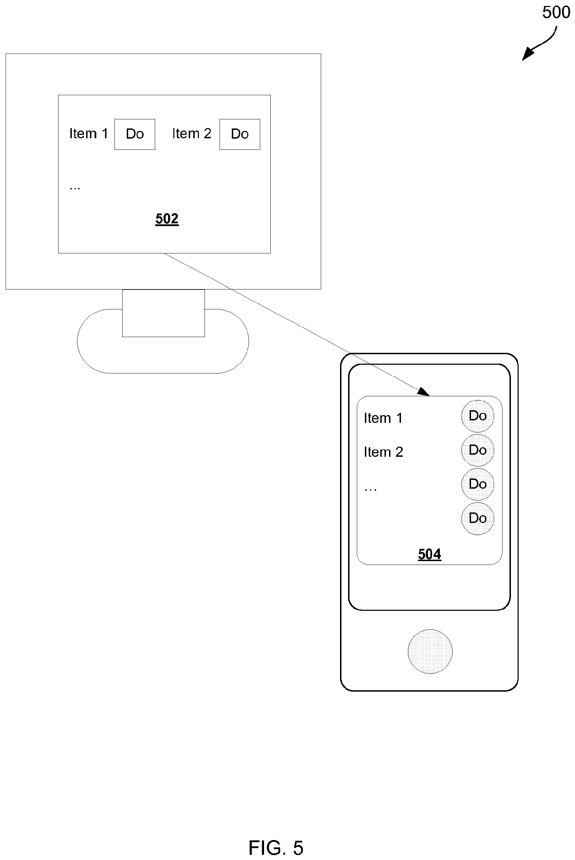

FIG. 5 shows exemplary optimization of content for a mobile device. Interface items and corresponding controls rendered on a desktop screen 502 may be optimized for a mobile device 504 and provide for selection and data entry.

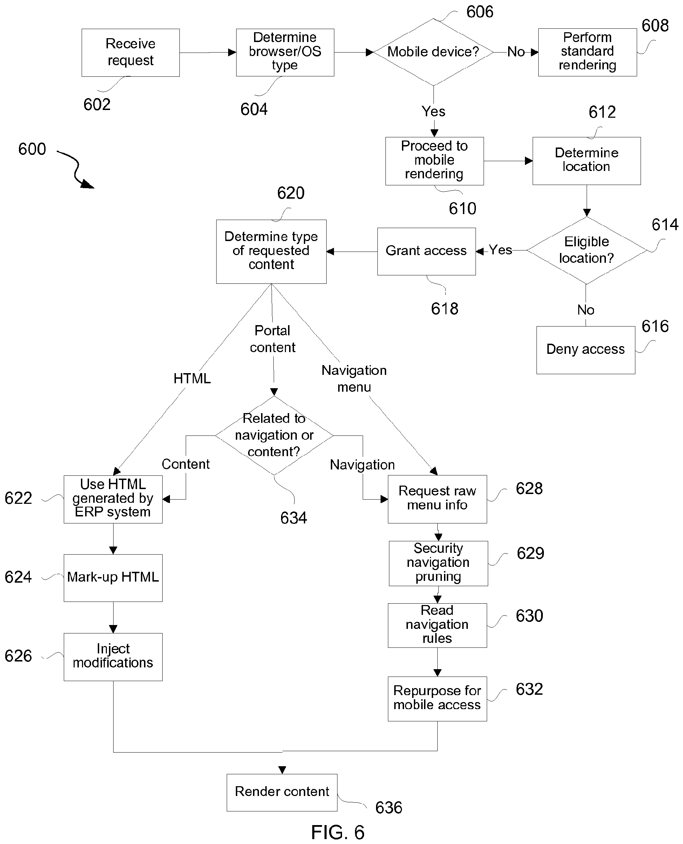

FIG. 6 is a process flow chart showing a more detailed method for handling a client request by the ERP system. The method 600 may be performed by processing logic that may comprise hardware (e.g., dedicated logic, programmable logic, microcode, etc.), software (such as that which is run on a general-purpose computer system or a dedicated machine), or a combination of both. In one exemplary embodiment, the processing logic resides at the system 200 illustrated in FIG. 2.

The method 600 may commence at operation 602 with the communication module 202 receiving a request from a client device. The type of browser/OS of the client device may be determined at operation 604 in order to determine whether a mobile device 606 is accessing the ERP system. If the request has not been received from a mobile device, the standard rendering is performed at operation 608. If, on the other hand, the request has come from a mobile device, the method 600 may proceed to the optimized rendering at operation 610. At operation 612, the location from which the system is accessed may be determined. The eligibility of the location for accessing the ERP system may be ascertained at operation 614. If the location is not eligible for access, the access is denied. If, on the other hand, the location is eligible, the access is granted and the type of the requested content is determined at operation 620. It should be understood that the location as used herein is not limited to a physical location of the client device and includes a network associated with the client device. Furthermore, besides the location-based security, the security can be based on, for example, various rules associated with multiple-factor authentication and time-basedconditions, a proxy involved in routing of the content, application data, screens associated with the content, and functionality associated with the content.

If the request is for HTML content, the HTML generated by the ERP application can be used as the starting point for mobile rendering at operation 622. If the request is for navigation menus, then the plug-in may request the raw menu information from the ERP system at operation 628. If the request is for portal content, then the plug-in, depending on whether the request is related to navigation or content 634, may either start with the HTML generated by the ERP application or request the raw menu information. The content generated by the ERP system may be marked up at operation 624 and necessary modifications injected at operation 626. The raw menu information, received at operation 628, may be read to determine navigation rules at operation 630 and repurposed for mobile access at operation 632. Thereafter, the content may be rendered on the client device at operation 636.

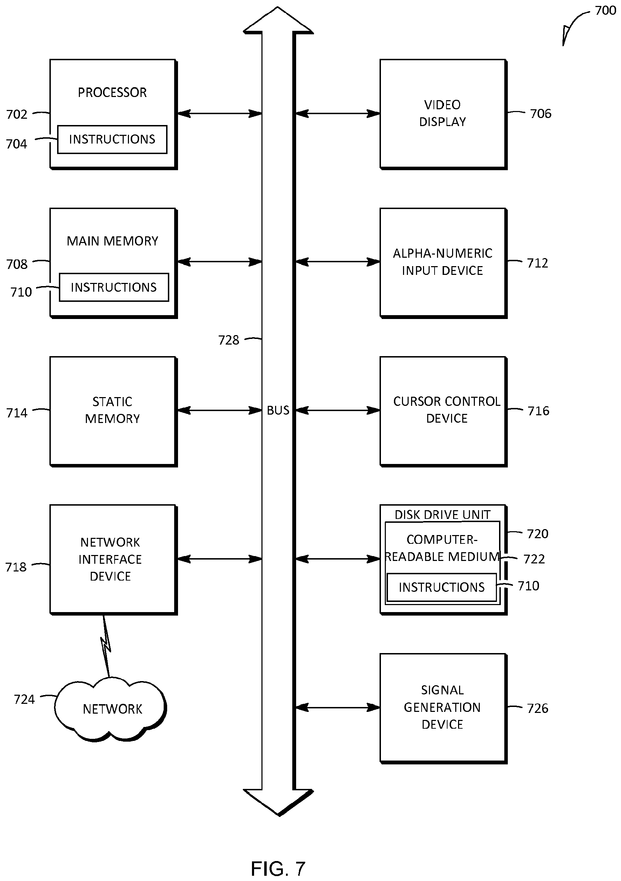

FIG. 7 is a diagrammatic representation of an exemplary machine in the form of a computer system 700, within which a set of instructions for causing the machine to perform any one or more of the methodologies discussed herein may be executed. In various exemplary embodiments, the machine operates as a standalone device or may be connected (e.g., networked) to other machines. In a networked deployment, the machine may operate in the capacity of a server or a client machine in a server-client network environment, or as a peer machine in a peer-to-peer (or distributed) network environment. The machine may be a personal computer (PC), a tablet PC, a set-top box (STB), a Personal Digital Assistant (PDA), a cellular telephone, a portable music player (e.g., a portable hard drive audio device such as an Moving Picture Experts Group Audio Layer 3 (MP3) player), a web appliance, a network router, switch or bridge, or any machine capable of executing a set of instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein.

The exemplary computer system 700 includes a processor or multiple processors 702 (e.g., a central processing unit (CPU), a graphics processing unit (GPU), or both), and a main memory 708 and static memory 714, which communicate with each other via a bus 728. The computer system 700 may further include a video display 706 (e.g., a liquid crystal display (LCD)). The computer system 700 may also include an alphanumeric input device 712 (e.g., a keyboard), a cursor control device 716 (e.g., a mouse), a voice recognition or biometric verification unit (not shown), a disk drive unit 720, a signal generation device 726 (e.g., a speaker) and a network interface device 718. The computer system 700 may further include a data encryption module (not shown) to encrypt data.

The disk drive unit 720 includes a computer-readable medium 722 on which is stored one or more sets of instructions and data structures (e.g., instructions 710) embodying or utilizing any one or more of the methodologies or functions described herein. The instructions 710 may also reside, completely or at least partially, within the main memory 708 and/or within the processors 702 during execution thereof by the computer system 700. The main memory 708 and the processors 702 may also constitute machine-readable media.

The instructions 710 may further be transmitted or received over a network 724 via the network interface device 718 utilizing any one of a number of well-known transfer protocols (e.g., HTTP).

While the computer-readable medium 722 is shown in an exemplary embodiment to be a single medium, the term "computer-readable medium" should be taken to include a single medium or multiple media (e.g., a centralized or distributed database and/or associated caches and servers) that store the one or more sets of instructions. The term "computer-readable medium" shall also be taken to include any medium that is capable of storing, encoding, or carrying a set of instructions for execution by the machine and that causes the machine to perform any one or more of the methodologies of the present application, or that is capable of storing, encoding, or carrying data structures utilized by or associated with such a set of instructions. The term "computer-readable medium" shall accordingly be taken to include, but not be limited to, solid-state memories, optical and magnetic media, and carrier wave signals. Such media may also include, without limitation, hard disks, floppy disks, flash memory cards, digital video disks, random access memory (RAM), read only memory (ROM), and the like.

The exemplary embodiments described herein may be implemented in an operating environment comprising software installed on a computer, in hardware, or in a combination of software and hardware.

Although embodiments have been described with reference to specific exemplary embodiments, it will be evident that various modifications and changes may be made to these embodiments without departing from the scope of the system and method described herein. Accordingly, the specification and drawings are to be regarded in an illustrative rather than a restrictive sense.

## Claims

1. A web server plug-in for automatic selective optimization and rendering of content based on characteristics of a client device (150), the web server plug-in comprising:
a communication module (202) configured to receive the content from an enterprise resource planning system (100), the system (100) being pre-configured based on specific business rules;
an analyzing module (204) configured to determine properties associated with the content;
an optimization module (206) configured to selectively optimize the content, based on the properties associated with the content and the characteristics of the client device (150), thereby producing optimized content, wherein the optimization module (206) is configured to:
determine (620) the type of content requested, from the system (100),
if HTML content is requested, use (622) the HTML content generated by the system (100) as starting point and inject (626) modifications into the HTML content generated by the system (100) to generate a client specific HTML output, and
if a navigation menu is requested, request (628) raw menu information from the system (100) to determine (630) navigation rules and repurpose (632) the navigation rules for mobile access; and
a rendering module (208) configured to process the optimized content for selective rendering (636) of the optimized content on the client device (150).

2. The web server plug-in of claim 1, further comprising a content add-on module, the content add-on module being configured to facilitate additional customization of the optimized content without affecting previously performed customizations.

3. The web server plug-in of claim 2, wherein the content add-on module is configured to hide content, to reorder content, to change user interface controls, and/or to change user interface attributes.

4. The web server plug-in of claim 1, 2 or 3, further comprising a multi-language module, the multi-language module being configured to:
detect one or more languages available on the system (100);
based on the detection, automatically present a user associated with the client device (150) with one or more language choices;
receive, from the user, a language choice selected from the one or more language choices; and
render the content in a language corresponding to the language choice.

5. The web server plug-in of any of the preceding claims, wherein the characteristics of the client device (150) include one or more of the following: a location, a viewing width, and an orientation.

6. The web server plug-in of any of the preceding claims, wherein the client device (150) includes one or more of a desktop, a laptop, a notebook, an ultrabook, a smartphone, and a tablet computer.

7. The web server plug-in of any of the preceding claims, further comprising a security module (210) configured to provide location-based security for interactions with the system (100) by a determination whether to grant or deny access to the content based on a location from which a user is accessing the system (100).

8. The web server plug-in of any of the preceding claims, further comprising a logging module (212) configured to log information related to one or more of the following: an identity of a user and actions performed under the user in the system (100), an identity of the data accessed, and a source of a location associated with the client device (150).

9. The web server plug-in of any of the preceding claims, further comprising an extracting module (214) configured to read and cache configuration of the client device (150) on a web server (130).

10. A method for automatic selective optimization and rendering of content based on characteristics of a client device (150), the method being performed by a web server plug-in and comprising the steps of:
receiving the content from an enterprise resource planning system (100), the system (100) being pre-configured based on specific business rules;
analyzing the content to determine properties associated with the content;
selectively optimizing the content, based on the properties associated with the content and the characteristics of the client device (150), thereby producing optimized content, wherein the optimizing comprises:
determining (620) the type of content requested from the system (100),
if HTML content is requested, using (622) the HTML content generated by the system (100) as starting point and injecting (626) modifications into the HTML content generated by the system (100) to generate a client specific HTML output, and
if a navigation menu is requested, requesting (628) raw menu information from the system (100) to determine (630) navigation rules and repurposing (632) the navigation rules for mobile access; and processing the optimized content for selective rendering of the optimized content on the client device (150).

11. The method of claim 10, further comprising providing location-based security for interactions with the system (100) by determining whether to grant or deny access to the content based on a location from which a user is accessing the system (100).

12. The method of claim 10 or 11, further comprising logging information related to an identity of a user and actions performed under the user in the system (100).

13. A non-transitory machine-readable medium comprising instructions that, when executed, perform the method according to any of claims 10-12.

## Patentansprüche

1. Webserver-Plug-in für die automatische selektive Optimierung und Wiedergabe von Inhalt auf der Basis von Eigenschaften einer Client-Vorrichtung (150), wobei das Webserver-Plug-in umfasst:
ein Kommunikationsmodul (202), das dazu ausgelegt ist, den Inhalt von einem Unternehmensressourcen-Planungssystem (100) zu empfangen, wobei das System (100) auf der Basis von speziellen Geschäftsregeln vorkonfiguriert ist;
ein Analysemodul (204), das dazu ausgelegt ist, Merkmale zu bestimmen, die dem Inhalt zugeordnet sind;
ein Optimierungsmodul (206), das dazu ausgelegt ist, den Inhalt auf der Basis der dem Inhalt zugeordneten Merkmale und der Eigenschaften der Client-Vorrichtung (150) selektiv zu optimieren, wodurch optimierter Inhalt erzeugt wird, wobei das Optimierungsmodul (206) dazu ausgelegt ist:
den Typ des vom System (100) angeforderten Inhalts zu bestimmen (620),
falls HTML-Inhalt angefordert wird, den HTML-Inhalt, der durch das System (100) erzeugt wird, als Ausgangspunkt zu verwenden (622), und Modifikationen in den durch das System (100) erzeugten HTML-Inhalt einzuspeisen (626), um eine für den Client spezifische HTML-Ausgabe zu erzeugen, und
falls ein Navigationsmenü angefordert wird, rohe Menüinformationen von dem System (100) anzufordern (628), um Navigationsregeln zu bestimmen (630), und die Navigationsregeln für den mobilen Zugriff umzufunktionieren (632); und
ein Wiedergabemodul (208), das dazu ausgelegt ist, den optimierten Inhalt für die selektive Wiedergabe (636) des optimierten Inhalts an der Client-Vorrichtung (150) zu verarbeiten.

2. Webserver-Plug-in nach Anspruch 1, das ferner ein Inhaltszusatzmodul umfasst, wobei das Inhaltszusatzmodul dazu ausgelegt ist, die zusätzliche kundenspezifische Anpassung des optimierten Inhalts zu erleichtern, ohne sich auf vorher durchgeführte kundenspezifische Anpassungen auszuwirken.

3. Webserver-Plug-in nach Anspruch 2, wobei das Inhaltszusatzmodul dazu ausgelegt ist, Inhalt zu verbergen, Inhalt umzuordnen, Benutzerschnittstellensteuerungen zu ändern und/oder Benutzerschnittstellenattribute zu ändern.

4. Webserver-Plug-in nach Anspruch 1, 2 oder 3, das ferner ein Mehr-Sprachen-Modul umfasst, wobei das Mehr-Sprachen-Modul dazu ausgelegt ist:
eine oder mehrere Sprachen zu detektieren, die im System (100) verfügbar sind; auf der Basis der Detektion automatisch einem Benutzer, der der Client-Vorrichtung (150) zugeordnet ist, eine oder mehrere Sprachauswahlen zu präsentieren;
vom Benutzer eine Sprachauswahl zu empfangen, die aus der einen oder den mehreren Sprachauswahlen ausgewählt ist; und
den Inhalt in einer Sprache wiederzugeben, die der Sprachauswahl entspricht.

5. Webserver-Plug-in nach einem der vorangehenden Ansprüche, wobei die Eigenschaften der Client-Vorrichtung (150) eine oder mehrere der Folgenden umfassen: einen Ort, eine Betrachtungsbreite und eine Orientierung.

6. Webserver-Plug-in nach einem der vorangehenden Ansprüche, wobei die Client-Vorrichtung (150) einen oder mehrere eines Desktop, eines Laptop, eines Notebook, eines Ultrabook, eines Smartphones und eines Tablet-Computers umfasst.

7. Webserver-Plug-in nach einem der vorangehenden Ansprüche, das ferner ein Sicherheitsmodul (210) umfasst, das dazu ausgelegt ist, Sicherheit auf Ortsbasis für Interaktionen mit dem System (100) durch eine Bestimmung, ob der Zugriff auf den Inhalt gewährt oder verweigert werden soll, auf der Basis eines Orts, von dem aus ein Benutzer auf das System (100) zugreift, bereitzustellen.

8. Webserver-Plug-in nach einem der vorangehenden Ansprüche, das ferner ein Protokollierungsmodul (212) umfasst, das dazu ausgelegt ist, Informationen in Bezug auf eine oder mehrere der Folgenden zu protokollieren: eine Identität eines Benutzers und Handlungen, die unter dem Benutzer im System (100) durchgeführt werden, eine Identität der Daten, auf die zugegriffen wird, und eine Quelle eines Orts, der der Client-Vorrichtung (150) zugeordnet ist.

9. Webserver-Plug-in nach einem der vorangehenden Ansprüche, das ferner ein Extraktionsmodul (214) umfasst, das dazu ausgelegt ist, die Konfiguration der Client-Vorrichtung (150) zu lesen und auf einem Webserver (130) im Cache zu speichern.

10. Verfahren für die automatische selektive Optimierung und Wiedergabe von Inhalt auf der Basis von Eigenschaften einer Client-Vorrichtung (150), wobei das Verfahren durch ein Webserver-Plug-in durchgeführt wird und die Schritte umfasst:
Empfangen des Inhalts von einem Unternehmensressourcen-Planungssystem (100), wobei das System (100) auf der Basis von speziellen Geschäftsregeln vorkonfiguriert ist;
Analysieren des Inhalts, um Merkmale zu bestimmen, die dem Inhalt zugeordnet sind;
selektives Optimieren des Inhalts auf der Basis der dem Inhalt zugeordneten Merkmale und der Eigenschaften der Client-Vorrichtung (150), wodurch optimierter Inhalt erzeugt wird, wobei die Optimierung umfasst:
Bestimmen (620) des Typs des vom System (100) angeforderten Inhalts,
falls HTML-Inhalt angefordert wird, Verwenden (622) des HTML-Inhalts, der durch das System (100) erzeugt wird, als Ausgangspunkt und Einspeisen (626) von Modifikationen in den durch das System (100) erzeugten HTML-Inhalt, um eine für den Client spezifische HTML-Ausgabe zu erzeugen, und
falls ein Navigationsmenü angefordert wird, Anfordern (628) von rohen Menüinformationen von dem System (100), um Navigationsregeln zu bestimmen (630), und Umfunktionieren (632) der Navigationsregeln für den mobilen Zugriff; und
Verarbeiten des optimierten Inhalts für die selektive Wiedergabe des optimierten Inhalts an der Client-Vorrichtung (150).

11. Verfahren nach Anspruch 10, das ferner das Bereitstellen von Sicherheit auf Ortsbasis für Interaktionen mit dem System (100) durch Bestimmen, ob der Zugriff auf den Inhalt gewährt oder verweigert werden soll, auf der Basis eines Orts, von dem aus ein Benutzer auf das System (100) zugreift, umfasst.

12. Verfahren nach Anspruch 10 oder 11, das ferner das Protokollieren von Informationen in Bezug auf eine Identität eines Benutzers und Handlungen, die unter dem Benutzer im System (100) durchgeführt werden, umfasst.

13. Nichtflüchtiges maschinenlesbares Medium mit Befehlen, die, wenn sie ausgeführt werden, das Verfahren nach einem der Ansprüche 10-12 durchführen.

## Revendications

1. Module d'extension de serveur Web pour une optimisation et une restitution sélectives automatiques de contenu sur la base de caractéristiques d'un dispositif client (150), le module d'extension de serveur Web comprenant :
un module de communication (202) configuré pour recevoir le contenu à partir d'un système de planification de ressources d'entreprise (100), le système (100) étant préconfiguré sur la base de règles métier spécifiques ;
un module d'analyse (204) configuré pour déterminer des propriétés associées au contenu ;
un module d'optimisation (206) configuré pour optimiser sélectivement le contenu, sur la base des propriétés associées au contenu et des caractéristiques du dispositif client (150), produisant ainsi un contenu optimisé, dans lequel le module d'optimisation (206) est configuré pour :
déterminer (620) le type de contenu demandé, à partir du système (100),
si un contenu HTML est demandé, utiliser (622) le contenu HTML généré par le système (100) comme point de départ, et injecter (626) des modifications dans le contenu HTML généré par le système (100) pour générer une sortie HTML spécifique au client, et
si un menu de navigation est demandé, demander (628) des informations de menu brutes à partir du système (100) pour déterminer (630) des règles de navigation, et réutiliser (632) les règles de navigation pour un accès mobile ; et
un module de restitution (208) configuré pour traiter le contenu optimisé pour la restitution sélective (636) du contenu optimisé sur le dispositif client (150).

2. Module d'extension de serveur Web selon la revendication 1, comprenant en outre un module d'adjonction de contenu, le module d'adjonction de contenu étant configuré pour faciliter une personnalisation supplémentaire du contenu optimisé sans affecter les personnalisations effectuées précédemment.

3. Module d'extension de serveur Web selon la revendication 2, dans lequel le module d'adjonction de contenu est configuré pour cacher un contenu, pour réorganiser le contenu, pour modifier des commandes d'interface utilisateur, et/ou pour modifier des attributs de l'interface utilisateur.

4. Module d'extension de serveur Web selon la revendication 1, 2 ou 3, comprenant en outre un module multilingue, le module multilingue étant configuré pour :
détecter une ou plusieurs langues disponibles sur le système (100) ;
sur la base de la détection, présenter automatiquement à un utilisateur associé au dispositif client (150) un ou plusieurs choix de langue ;
recevoir, de l'utilisateur, un choix de langue choisi parmi lesdits un ou plusieurs choix de langue ; et
restituer le contenu dans une langue correspondant au choix de langue.

5. Module d'extension de serveur Web selon l'une quelconque des revendications précédentes, dans lequel les caractéristiques du dispositif client (150) comprennent une ou plusieurs des caractéristiques suivantes : un emplacement, une largeur de visualisation, et une orientation.

6. Module d'extension de serveur Web selon l'une quelconque des revendications précédentes, dans lequel le dispositif client (150) comprend l'un ou plusieurs parmi un ordinateur de bureau, un ordinateur portable, un ordinateur bloc-notes, un ultraportable, un smartphone, et une tablette.

7. Module d'extension de serveur Web selon l'une quelconque des revendications précédentes, comprenant en outre un module de sécurité (210) configuré pour fournir une sécurité basée sur la localisation pour des interactions avec le système (100) par une détermination visant à savoir s'il faut accorder ou refuser l'accès au contenu sur la base d'un emplacement à partir duquel un utilisateur accède au système (100).

8. Module d'extension de serveur Web selon l'une quelconque des revendications précédentes, comprenant en outre un module de journalisation (212) configuré pour journaliser des informations liées à l'un ou plusieurs de ce qui suit : une identité d'un utilisateur et des actions réalisées sous l'utilisateur dans le système (100), une identité des données consultées, et une source d'un emplacement associé au dispositif client (150).

9. Module d'extension de serveur Web selon l'une quelconque des revendications précédentes, comprenant en outre un module d'extraction (214) configuré pour lire et mettre en cache la configuration du dispositif client (150) sur un serveur Web (130).

10. Procédé d'optimisation et de restitution sélectives automatiques de contenu sur la base de caractéristiques d'un dispositif client (150), le procédé étant effectué par un module d'extension de serveur Web et comprenant les étapes consistant à :
recevoir le contenu à partir d'un système de planification de ressources d'entreprise (100), le système (100) étant préconfiguré sur la base de règles métier spécifiques ;
analyser le contenu pour déterminer des propriétés associées au contenu ;
optimiser sélectivement le contenu, sur la base des propriétés associées au contenu et des caractéristiques du dispositif client (150), produisant ainsi un contenu optimisé, dans lequel l'optimisation comprend de :
déterminer (620) le type de contenu demandé, à partir du système (100),
si un contenu HTML est demandé, utiliser (622) le contenu HTML généré par le système (100) comme point de départ, et injecter (626) des modifications dans le contenu HTML généré par le système (100) pour générer une sortie HTML spécifique au client, et
si un menu de navigation est demandé, demander (628) des informations de menu brutes à partir du système (100) pour déterminer (630) des règles de navigation, et réutiliser (632) les règles de navigation pour un accès mobile ; et
traiter le contenu optimisé pour une restitution sélective du contenu optimisé sur le dispositif client (150).

11. Procédé selon la revendication 10, comprenant en outre de fournir une sécurité basée sur la localisation pour des interactions avec le système (100) en déterminant s'il faut accorder ou refuser l'accès au contenu sur la base d'un emplacement à partir duquel un utilisateur accède au système (100).

12. Procédé selon la revendication 10 ou 11, comprenant en outre des informations de journalisation liées à une identité d'un utilisateur et à des actions réalisées sous l'utilisateur dans le système (100).

13. Support lisible par machine non transitoire comprenant des instructions qui, lorsqu'elles sont exécutées, exécutent le procédé selon l'une quelconque des revendications 10 à 12.
